# EUROPEAN PATENT SPECIFICATION

(11) **EP 3 861 286 B1**
(45) Date of publication and mention of the grant of the patent: **02.09.2026**
(21) Application number: 19783467.4
(22) Date of filing: 30.09.2019
(51) Int. Cl.: G01C 21/00, G01C 21/32, G09B 29/00, G06F 8/65

(54) **METHOD, APPARATUS, SYSTEM AND COMPUTER PROGRAM FOR UPDATING A MAP**
VERFAHREN, VORRICHTUNG, SYSTEM UND COMPUTERPROGRAMM ZUR AKTUALISIERUNG EINER KARTE
PROCÉDÉ, APPAREIL, SYSTÈME ET PROGRAMME INFORMATIQUE DE MISE À JOUR D'UNE CARTE

(30) Priority: 01.10.2018 GB 201816002
(43) Date of publication of application: 11.08.2021
(73) Proprietor: TomTom Global Content B.V., 1011 AC Amsterdam (NL)
(72) Inventor: OLTHOFF, Taco, 1011 AC Amsterdam (NL); REXWINKEL, Christian, 1011 AC Amsterdam (NL)
(74) Representative: Swindell & Pearson Limited
(86) International application number: PCT/EP2019/076452
(87) International publication number: WO 2020/070066

(56) References cited:
- JP-A- 2015 001 471
- KR-A- 20170 140 653
- US-A1- 2010 161 219
- US-A1- 2015 178 067

## Description

### TECHNOLOGICAL FIELD

Examples of the present disclosure relate to a method, apparatus, system and computer program for updating a map. Certain examples, though without prejudice to the foregoing, relate to updating a map stored on a device, such as an in-vehicle built-in navigation device.

### BACKGROUND

Conventional methods for updating an electronic map stored on a navigational device (such as an in-vehicle built-in satellite navigation device) are not always optimal.

Previously, an electronic map stored on a navigation device would typically cover an entire continent or country. Updating the map would require manual intervention. A user would typically need to manually download a map update for the entire map (e.g. on the user's home computer) and then transferred the map update to the in-vehicle built-in navigation device (e.g. via a USB stick). Moreover, during the process of updating the map pre-stored on the navigation device, i.e. installing the map update, the navigation device may not be operable or able to perform navigation functions. Such issues thereby give rise to a sub-optimal user experience. Furthermore, due to the updating process being so involved, a user may not update the map frequently. This may lead to a risk that the stored map comprises out-of-date/unreliable map data.

It is useful to provide an improved method for updating a map.

JP2015 001471 A discloses a system for updating a map of a navigation device.

The listing or discussion of any prior-published document or any background in this specification should not necessarily be taken as an acknowledgement that the document or background is part of the state of the art or is common general knowledge. One or more aspects/examples of the present disclosure may or may not address one or more of the background issues.

### BRIEF SUMMARY

According to a first aspect of the present invention, there is provided a method according to claim 1.

According to a second aspect of the present invention, there is provided an apparatus according to claim 10.

The apparatus may be one or more of: a navigation device; an in-vehicle built in navigation device; a portable navigation device; a handheld mobile communication device; a mass storage device; or a module of an Advanced Driver Assistance System.

According to a third aspect of the present invention, there is provided a computer program according to claim 12.

According to a fourth aspect of the present invention, there is provided a system according to claim 13.

According to one or more examples of the disclosure there are provided examples as claimed in the appended claims.

### BRIEF DESCRIPTION OF THE DRAWINGS

For a better understanding of various examples of the present disclosure that are useful for understanding the detailed description and certain embodiments of the invention, reference will now be made by way of example only to the accompanying drawings in which:
FIG. 1 schematically illustrates an example of a method according to the present disclosure;
FIG. 2 schematically illustrates an example of a map for use in examples of the present disclosure;
FIG. 3 schematically illustrates a further example of a method according to the present disclosure;
FIG. 4 schematically illustrates a further example of a map for use in examples of the present disclosure;
FIG. 5 schematically illustrates an example of an apparatus according to the present disclosure;
FIG. 6 schematically illustrates an example of a communications system according to the present disclosure;
FIG. 7 schematically illustrates an example of a navigation device according to the present disclosure; and
FIG. 8 schematically illustrates an example of a further a communications system according to the present disclosure.

The Figures are not necessarily to scale. Certain features and views of the figures may be shown schematically or exaggerated in scale in the interest of clarity and conciseness. For example, the dimensions of some elements in the figures may be exaggerated relative to other elements to aid explication.

Similar reference numerals are used in the figures to designate similar features. For clarity, all reference numerals are not necessarily displayed in all figures.

### DETAILED DESCRIPTION

The Figures schematically illustrate a method 100 of updating map data 512 for a map 200 stored on an apparatus 500, wherein the map 200 is partitioned into a plurality of geographical areas 203₁ - 203ₙ, the method comprising:
receiving location information 201 representative of one or more journeys of a user;
using the location information 201 representative of one or more journeys of the user to determine a first set of one or more of the plurality of geographical areas 204₁, 204₂;
defining a first region 205 of the map 200 based on the first set of one or more of the plurality of geographical areas 204₁, 204₂;
determining whether the stored map data 513 for the geographic areas 204₁, 204₂ of the first region 205 are up-to-date; and
responsive to determining that the stored map data 513 for at least one of the geographic areas 204₁, 204₂ of the first region 205 is not up-to-date, selecting a first communication means 803 for receiving updated map data for the at the least one of the geographic areas 204₁, 204₂ of the first region 205.

For the purposes of illustration and not limitation, in some examples, a user's historic journey/route data (and also data representing a user's planned or current journey/route) are used to identify/determine geographical areas of the map that are of most relevance to a user. For example, a user's previously made journeys/routes are used to determine which of the geographical areas of the map have previously been most frequently travelled in (e.g. most frequently used or visited). Likewise, a user's current and planned journeys/routes are used to determine which of the geographical areas of the map the user is currently in or will be travelling in. Such geographical areas are identified, selected and used to define a first region of the map.

Examples of the disclosure thereby determine/learn which geographical areas are of most relevance to the user, and define a region therefrom. Such an identified region may be assigned a high priority. Examples then seek to ensure that the map data for such a high priority region of the map is maintained up-to-date and kept reliable by automatically determining whether the stored map data for the region is up-to-date (i.e. by checking if there is a newer version of the map data for any or the geographical regions of the first region). If the map data for the region is not up-to-date, a first communication means is selected for automatically downloading updated map data for the geographical areas of the region that have out-of-date map data. For example, the selected communication means may be a long range wireless communication network, such as a cellular communication network (i.e. that may be more readily available and accessible [as compared to a short range wireless communication network, such as a WLAN]). Thus a more reliable and robust method of updating map data may be provided.

In certain other examples, plural regions of the map may be defined with a hierarchical ranking of importance, wherein the regions are each assigned a priority level that may determine a frequency and/or order of: checking for updates for the region, downloading updates for the region and/or installing updates for the region. This enables the updating of more relevant regions to be given a higher priority than less relevant regions, thereby making efficient use of communication bandwidth resources in downloading the map updates as well as computational resources in installing map updates whilst seeking to keep all regions of the map optimally updated.

Advantageously, various examples may enable map data to be updated automatically, efficiently and in a reliable and minimally invasive manner (with minimal/no user intervention required or manual map management). This thereby facilitates the provision of seamless updating of map data and seeks to ensure that the most relevant/key regions of importance to the user are reliably and constantly maintained and kept up to date. A user may thus be confident that his/her map data is maintained up to date.

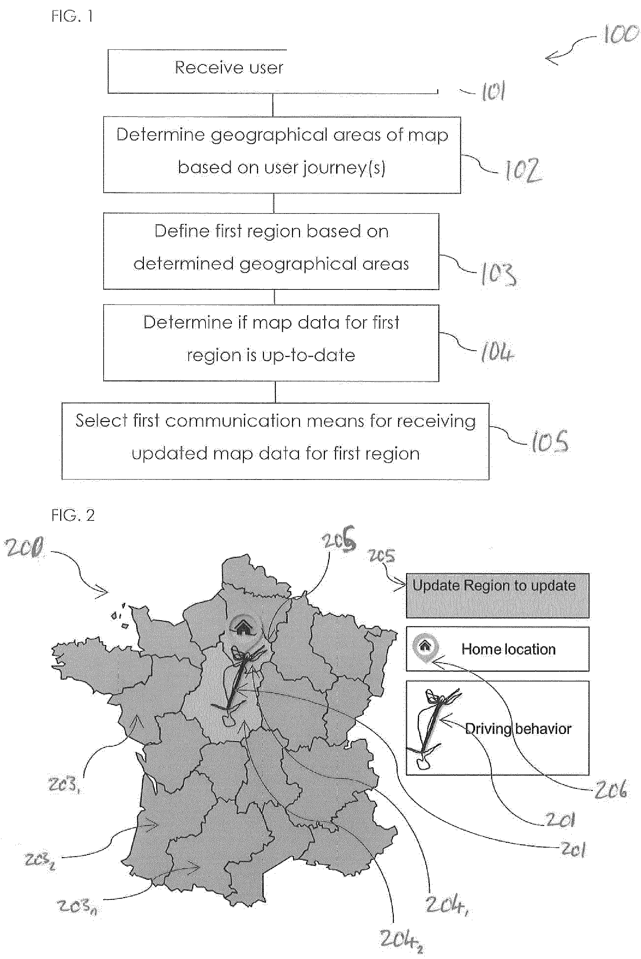

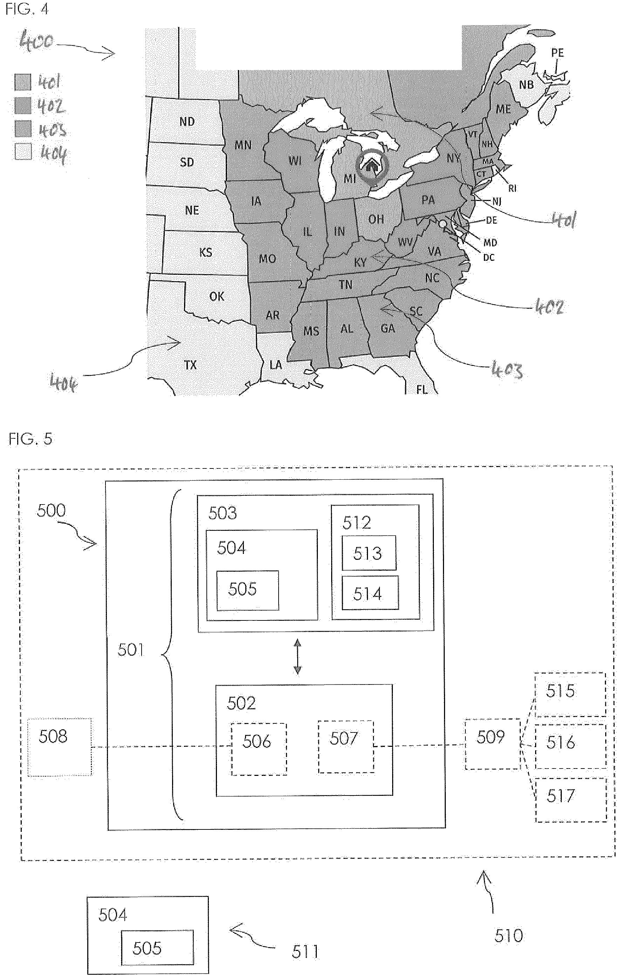

FIG. 1 schematically illustrates a flow chart of a method 100 of updating map data 512 for a map 200 (see Fig. 2) stored on an apparatus (500 see FIG. 5) according to an example of the present disclosure. The blocks of FIG. 1 may represent sections of instructions/code in a computer program. The blocks of FIG. 1 may or may not be performed by a single physical entity (such as is described with reference to FIG. 5).

The map 200 may be an electronic map pre-stored on the apparatus 500 and partitioned into a plurality of individually updatable pre-determined geographical areas 203₁ - 203ₙ. The geographical area may be of any size/scale. The geographical area may cover any number/amount of navigable elements such as road segments. In certain examples, a predetermined geographical area may cover only a few or even just one road segment. The number, size/scale of the updatable pre-determined geographical areas 203₁ - 203ₙ may be determined by a map service provider/map data source provider. The provision of a pre-stored map on the navigation device enables off-line navigation (c.f. on-line navigation wherein map data is only downloaded 'on-the-fly', i.e. when currently needed (i.e. continually in real-time) and map data needs to be downloaded each and every time it is needed).

In block 101, location/position information 201 representative/indicative of one or more journeys of a user is received. Such location information may correspond to data indicative of: previously made/historic user journeys/routes, planned user journeys/routes or a current user journey/route. Such journey/route information/data may comprise previously tracked and recorded route data or current or planned route data. In some examples, the location information may comprise traces or line segments of (tracked or planned) positions defining a (previous, current or planned) journey/route.

In block 102, the location information 201 representative of one or more journeys of the user is used to determine a first set of one or more of the plurality of geographical areas 204₁, 204₂.

Where the one or more journeys 201 comprises previously made journeys, the geographical areas 204₁, 204₂ of the first set may be determined by selecting the geographical areas that have been most frequently previously travelled in by the user. This may be determined for example by determining those geographical areas of the map in which:
a journey most frequently started from, i.e. identifying geographical areas containing greater that a threshold amount (e.g. > X%) of journey origin points);
a journey most frequently ended at, i.e. identifying geographical areas containing greater that a threshold amount (e.g. > Y%) of journey destination points); and/or
a journey most frequently passed through, i.e. identifying geographical areas containing greater that a threshold amount (e.g. > Z%) of journeys passing therethrough).

Where the one or more journeys comprises a journey the user is current undergoing, or one or more planned journeys of the user; the geographical areas of the first set may be determined, for example by determining those geographical areas of the map in which the current or planned journeys pass through.

It is appreciated that the first set 204₁, 204₂ would likely include the geographical area within which the user's home location 206 is located.

Such a first set of determined geographical areas 204₁, 204₂ may be deemed to represent/be indicative of the geographical areas of the map that are of most relevance/importance to the user (i.e. based on past, current and planned journeys/driving behaviour).

In block 103, a first region 205 of the map 200 is defined based on the geographical areas 204₁, 204₂ of the first set, i.e. the first region is formed from the geographical areas 204₁, 204₂ of the first set.

In block 104, a determination is made as to whether the stored map data 513 for the geographic areas 204₁, 204₂ of the first region 205 are up-to-date. This may be effected in any suitable manner and may involve communicating with a map source service provider (e.g. to check if the version number/date of the currently stored map data for the geographic areas 204₁, 204₂ corresponds to the latest version number/date of the map data of the service provider).

In block 105, responsive to determining that the stored map data 513 for at least one of the geographic areas 204₁, 204₂ of the first region 205 is not up-to-date, a first communication means is selected for receiving updated map data for the at the least one of the geographic areas 204₁, 204₂ of the first region 205.

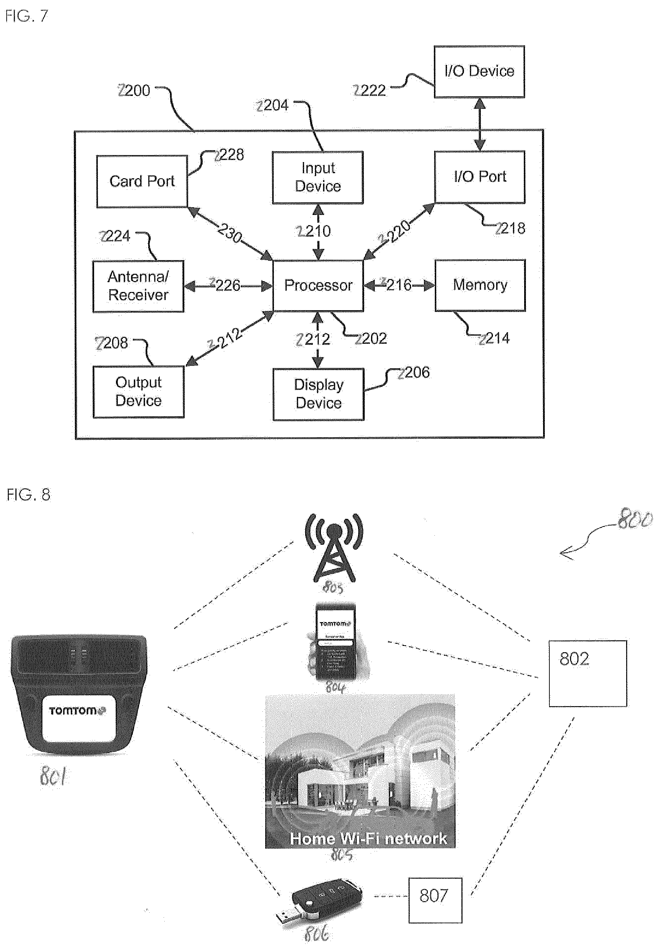

Thus, examples of the disclosure provide for an active step of specifically selecting a communication means for downloading the updated map data (i.e. selecting one communication means out of plural possible communication means [see with respect to 803 - 806 of FIG. 8]). Such a selection may also be dependent upon accessibility/availability of the communication means. For instance, in some examples, a long range wireless communication network, such as a cellular communication network, may be selected (having greater accessibility/availability than a short range wireless communication network, such as WLAN) for receiving updates for the first region.

Selecting the first communication means may comprises selecting one or more of a first communication pathway/channel, a first communication network, and a first wireless communication interface. In some examples, selecting the first communication means may comprises selecting one or more of: a long range communication network, a long range wireless communication interface, a cellular communication network, a cellular communication interface, a wired communication pathway, and a wired communication interface.

Various examples of the disclosure may provide improved reliability of a map by ensuring that key regions of importance/relevance to user are maintained via map updates received via an ubiquitous communication network (i.e. long range wireless communication, e.g. cellular network) whilst not overburdening such a network by minimising bandwidth use of the same (i.e. by using the network for receiving updated map data just the key region rather than using it for updating the entirety of the map). For other (less relevant) remaining geographical areas an alternative communication network may be used, e.g. a communication network having a less extensive/reduced range (such as Wi-Fi^{™} ) for updating map data of such lower priority regions.

Examples may thereby provide an optimal balance between sufficiently up-to-date map data (for the primary/relevant region) and optimal use of communication networks. Furthermore, since the map is partitioned into a plurality of geographical areas, there may be fewer updates in the first region (as compared to the entirety of the map) and hence the amount of data in a map update for the first region may be less as compared to receiving an update for the entirety of the map. This not only reduces bandwidth use, but also reduces processing and installation time for installing the update - thereby minimising disruption to a user (since the navigation device may not be operable or may have reduced performance during the installation process).

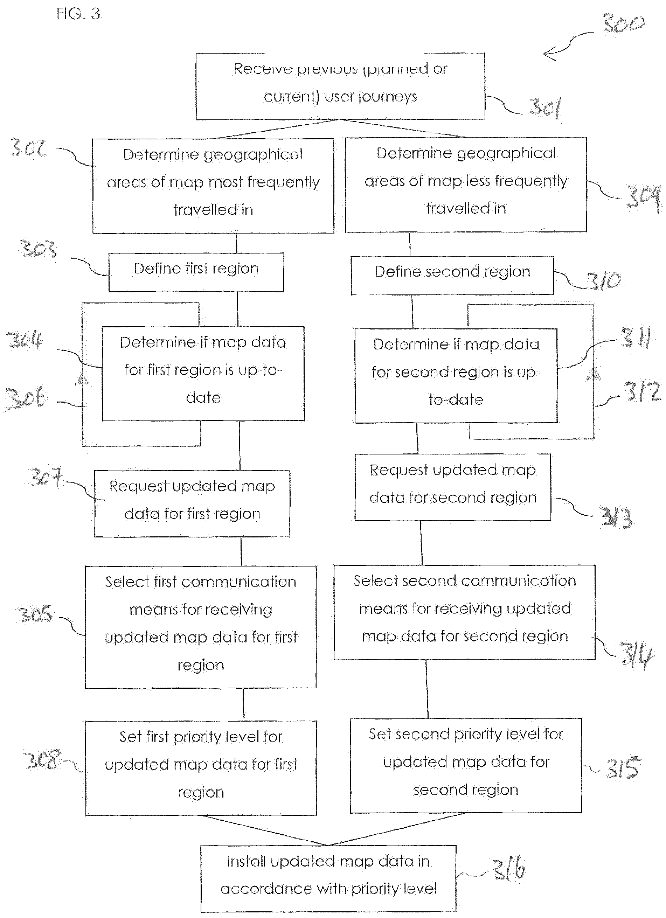

FIG. 3 schematically illustrates a flow chart of a further computer implemented method 300 of updating map data 512 for a map 200 (see Fig. 2) stored on an apparatus (500 see FIG. 5) according to an example of the present disclosure. The blocks of FIG. 3 may or may not be performed by a single physical entity (such as is described with reference to FIG. 5).

Blocks 301, 302, 303, 304 and 305 are broadly similar to blocks 201 - 205 of FIG. 1 and discussed above. However, in the left hand side branch of the flow chart in FIG. 3, the determination block 304 is repeated (as indicated by 306). The block 306 may thereby be automatically repeated at a first frequency. For example, the determination as to whether the map data of the first region is up-to-date may be repeated e.g. weekly or monthly.

In block 307, responsive to a determination that the map data of the first region is not up-to-date, a request for updated map data may be made. Such a request may be made to a map source provider, e.g. a server of the map source service provider. In some examples, as discussed further below, map updates may be pre-downloaded to an intermediary user device (e.g. a mass storage device of the user, such as a USB stick, or a mobile wireless communications device of the user, such as a smart phone). In which case, such a device serves as a map source for providing updated map data to the apparatus and an appropriate communication means may be selected (in block 305) to receive the updated map data, e.g. a wired communication pathway/wired communication interface to receive the updated map data from a USB stick.

In block 308, a first priority level is set/assigned to the first region.

Turning now to the right hand branch of the method in FIG. 3, this shows the steps involved in determining additional regions of the map.

In block 309, location information representative of one or more previous journeys of the user is used to determine at least a second set of one or more of the plurality of geographical areas that are less frequently travelled in by the user.

In block 310, at least a second region of the map is defined based on the at least second set.

In block 311, a determination is made as to whether the stored map data 514 for the geographic areas of the at least second region are up-to-date.

The determination block 311 is repeated (as indicated by 312). The block 311 may thereby be automatically repeated at a second frequency, which may be different to the first frequency. For example, the determination as to whether the map data of the second region is up-to-date may be repeated e.g. quarterly, annually.

The first frequency of step 306 may be different, and indeed higher, that the second frequency of step 312. In this manner, first/primary region (of high importance/relevance) may be more frequently checked for updates than the second/secondary region. Hence the higher priority and more relevant/important first/primary region may be kept more up-to-date than the less relevant/important second/secondary region.

Advantageously, rather than updating the entire map in one go (i.e. downloading map update data for the entire map and installing the same), various examples of the disclosure may prioritize the updates, such that an update of the first region occurs first and more frequently than an update of the second region. Such management of the timings of the updates may avoid the entirety of the map being updated at the same time, which may take an excessively long period of time (during which the navigation device either may not be able to perform navigation functions/utilise the map, thereby disrupting navigation). Instead, the automated updates for the first region may be automatically downloaded and installed as a high priority separately of the second region, and the automated update for the (lower priority) second region may be automatically downloaded and installed at a later time.

In block 313, responsive to a determination that the stored map data for at least one of the geographic areas of the second region is not up-to-date, a request for updated map data may be made. Such a request may be made to a map source provider as discussed above with regards to block 307.

In block 314, a second communication means is selected to receive updated map data for the at the least one of the geographic areas of the second region. Such a selection of the second communication means may comprise: a second communication pathway (channel), a second communication network, and a second wireless communication interface. Such a selection of the second communication means may comprise selecting one of:
a short range communication network, (e.g. Wi-Fi ^{™}/Bluetooth ^{™})
a short range wireless communication interface,
a wireless local area network,
a wireless local area network interface,
a wired communication pathway, and
a wired communication interface.

Blocks 305 and 314, in effect, enable the independent selection of a communication means for each region. The selection of a communication means (for receiving updated map data for a region) may be dependent upon the region, i.e. whether is it the first (higher relevance/priority) region or the second (lower relevance/priority) region. For example, a long range communication network, e.g. cellular network, may be used to receive updated may data for the first/primary region, thereby aiding the reliable and prompt delivery of the updated map data. Whereas the lower priority second region may select a short range wireless communication network, e.g. WLAN, which may not be as readily available/accessible as the cellular network (and hence the receipt of the updated map data may be delayed until such time as the short range wireless communication network is available/accessible. However, being of lower priority, such updates are less critical and can wait until such time as the short range wireless communication network is available for use.

Instead of the apparatus, e.g. an in-vehicle built-in navigation device, directly receiving updated map data from a server of a map service provider, the apparatus may receive the updated map data from an intermediary device such as a mass storage device (e.g. USB stick) or a portable communication device, wherein the updated map data is downloaded to such an intermediary device whereupon the downloaded map update data is then transferred to the apparatus. In such a manner, the receipt of the updated map data in blocks 305 and 314 may comprise transferring the updated map data from the mass storage device or the portable communication device to the apparatus. Examples of the invention may determine if such a source of updated map data is available, and if so use the same, and if unavailable, differing first and second communication means may be used to receive updated map data for the first and second regions respectively.

In block 315, a second priority level is set/assigned to the second region.

In block 316, an order of installation of the updated map data for the second region is determined in dependence upon its respective priority level.

Block 316, in effect, enables the hierarchical ordering of the installation of updated map data for a region based on the region and its priority level, i.e. whether is it the first (higher relevance/priority) region or the second (lower relevance/priority) region. For example, updated map data for the first/primary region may be installed in advance of and in preference to the installation of updated map data for the second/secondary region, thereby aiding the prompt utilization of the updated map data for the first region. Whereas the lower priority second region may have the installation of its updated map data delayed, e.g. until such time as its installation would not interfere with the operation of the apparatus/ navigation device (e.g. it is installed once the navigation device is not actively using navigational features and/or is in an idle state). However, being of lower priority, such updates are less critical and can be delayed in such a manner without adversely affecting the operation of the apparatus.

Block 316 may be useful where there are updates for both the first and second regions that have been received and are ready and available to be installed. With block 316, the installation of the updates may be applied in a hierarchical order depending on the relevance of the regions the updates relate to. For examples, updates for first/primary region (of higher importance/relevance than secondary region) are installed before updates for second/secondary region (of lower importance/relevance than primary region). Examples may provide a hierarchy of installation of updates, so that updates can be (received/picked up) and installed one by one in order (e.g. so as that primary region updates are firstly installed then other regions spiralling out to the borders of the map are subsequently installed in hierarchical order).

In some examples, updated map data for the entire map, or at least the geographical areas of the various regions (e.g. first and second regions) may be downloaded from a remote server of a map service provider to an intermediary portable user storage device, such as a portable mass storage device (e.g. USB stick) or a portable communication device (e.g. smart phone or tablet running an application that manages the [possibly substantially automated] download of required updates via, e.g. a user's home Wi-Fi^{™} , and storing the updates temporarily and forwarding them to the navigation device when the smartphone/tablet is connected, e.g. via Wi-Fi^{™}, to the navigation device/integrated navigation system built-in to the vehicle/In-Vehicle Infotainment (IVI), or vehicles head unit.

The method 300 may also comprise (though not shown):
collecting and storing positional information of the user; and
determining location information representative of one or more previous journeys of the user using the collected and stored positional information.

The flowchart of FIG. 3 and above described method represents one possible scenario among others. The order of the blocks shown is not absolutely required, so in principle, the various blocks can be performed out of order. Not all the blocks are essential. In certain examples one or more blocks may be performed in a different order or overlapping in time, in series or in parallel.

One or more blocks may be omitted or added or changed in some combination of ways.

In the example of FIG. 2, two regions are defined:
a first/primary/high relevance region (e.g. most frequently travelled geographical areas), and
a second/secondary/low relevance region (the remaining geographical areas of the map).

In some examples, additional regions (e.g. tertiary regions, quaternary regions, and so on) may be determined and defined that each has a hierarchical order of relevance/importance for the user and an associated priority levels.

FIG.4 illustrates a map 400, comprising;
a primary region of highest relevance (geographical areas most frequently previously travelled in, planned to be travelled in and currently being travelled in) - 401
a secondary region of mid/upper relevance (geographical areas less frequently previously travelled in, or the geographical areas adjacent the geographical areas of the first region) - 402
a tertiary region of mid/lower relevance (geographical areas even less frequently previously travelled in, or the geographical areas adjacent the geographical areas of the second region) - 403
a quaternary of lowest relevance (geographical areas not previously travelled in, the geographical areas adjacent the geographical areas of the third regions, or the remaining geographical areas) - 404.

Lower priority regions could have lower automatic update frequency and/or lower installation order priority.

Updated map data for a region may be provided either in the form of an "incremental update" or a "replacement update". Incremental updated map data comprises information relating to just changes in the stored (old version) of the map data. Such changes are then applied to the stored map data so as to update the same. By contrast, replacement update map data comprises the complete full and up-to-date version of the map data. The stored (old version) of the map data is removed and replaced with the new map data.

Whilst the use of incremental updates may result in less data and a smaller file size of map update data - and hence reduced file download time - the installation/execution of such incremental updated map data (i.e. the updating of the stored map data so as to apply the changes) is more computationally intensive. Hence the installation/execution time, and time for which the navigation device may be inoperable is increased.

By contrast, the installation of replacement updated map data (i.e. simply replacing the stored map data with the new map data without necessitating applying a plurality of individual changes) is less computationally intensive - and hence has a reduced installation/execution time and reduced time for which the navigation device may be inoperable. However, the amount of data and file download time for replacement updated map data is increased.

In examples of the present invention, the updated map data may be requested and/or received either as incremental updated map data or replacement updated map data. The request/receipt of the type of updated map data, i.e. whether it is to be incremental updated map data or replacement updated map data, may be dependent on the region/priority level of the region.

FIG. 5 schematically illustrates a block diagram of an apparatus 500 comprising means for performing methods according to the present disclosure, not least the methods of FIG. 1 and 3 discussed above. FIG. 5 schematically illustrates a block diagram of an apparatus and focuses on the functional components necessary for describing the operation of the apparatus.

The apparatus 500 comprises a controller 501 which, in the illustrated example, is provided by a processor 502 and memory 503.

The memory 503 stores a computer program 504 comprising computer readable program code/instructions 505 that, when executed by the processor 502, controls the apparatus 500 to perform the methods according to the present disclosure. The controller 501 is configured to receive input data and is configured to provide data output. The processor 502 may comprise an input interface 506 via which data 508 (e.g. not least journey information and updated map data) and/or commands are input to the processor 502, and an output interface 507 via which data 509 and/or commands are output by the processor 502.

The computer program 504 may be stored on a non-transitory computer-readable storage medium. The blocks illustrated in FIGS 1 and 3 may represent actions in a method and/or sections of instructions/code in the computer program 504.

The memory 503 may also store map data 512 for a map 200. The map data 512 comprises map data for each of the plurality of geographical areas 203₁-203ₙ (and hence comprises map data for the geographical areas 204₁, 204₂ of the determined first region 205 of the map. Such map data for the first region 205 is indicated as map data 513. Likewise, map data for the second region is indicated as map data 514).

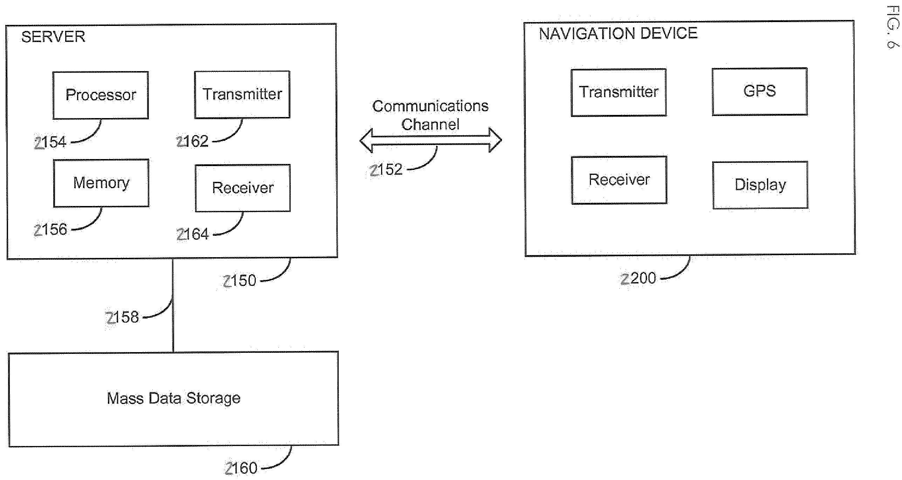

The apparatus 500 may be embodied as one or more of: a navigation device; an in-vehicle built in navigation device; a portable navigation device; a handheld mobile communication device; a mass storage device, or a module of an Advanced Driver Assistance System. The apparatus may be embodied by a computing device, not least such as those mentioned above. The apparatus may, for example, be a server device (such as server 2150 of FIG. 6) or a client device (such as navigation device 2200 of FIG. 6). In some examples, the apparatus may be embodied as a chip, chip set or module, i.e. for use in any of the foregoing. As used here 'module' refers to a unit or apparatus that excludes certain parts/components that would be added by an end manufacturer or a user.

FIG. 6 illustrates a navigation device 2200. The navigation device may be embodied not least for example as: an in-vehicle built-in navigation device that may be integrated into a vehicle's IVI, a Portable Navigation Device - PND, or a multifunctional mobile wireless communications device (such as a smart phone or tablet) with navigation functionality (e.g. location determining means and navigation software).

The navigation device comprise a GPS and a receiver comprising one or more communication means for establishing a data session via one or more differing communication networks, protocols and interfaces, e.g. for long range wireless communication, short range wireless communication and wired communication. The device can establish a network connection (through the Internet for example) with a server 2150. As such, a "mobile" network connection can be established between the navigation device 2200 (which can be, and often times is, mobile as it travels alone and/or in a vehicle) and the server 2150 to provide a "real-time" or at least very "up-to-date" gateway for information.

The establishing of the network connection between the device (via a service provider) and another device such as the server 2150, using the Internet for example, can be done in a known manner. In this respect, any number of appropriate data communications protocols can be employed, for example the TCP/IP layered protocol. Furthermore, the mobile device can utilize any number of communication standards such as CDMA2000, GSM, IEEE 802.11 a/b/c/g/n, etc.

Hence, it can be seen that the Internet connection may be utilised, which can be achieved via data connection, via a mobile phone or mobile phone technology within the navigation device 2200 for example.

Although not shown, the navigation device 2200 may, of course, include its own mobile telephone technology within the navigation device 2200 itself (including an antenna for example, or optionally using the internal antenna of the navigation device 2200). The mobile phone technology within the navigation device 2200 can include internal components, and/or can include an insertable card (e.g. Subscriber Identity Module (SIM) card), complete with necessary mobile phone technology and/or an antenna for example. As such, mobile phone technology within the navigation device 2200 can similarly establish a network connection between the navigation device 2200 and the server 2150, via the Internet for example, in a manner similar to that of any mobile device.

For telephone settings, a Bluetooth^{™} enabled navigation device may be used to work correctly with the ever changing spectrum of mobile phone models, manufacturers, etc., model/manufacturer specific settings may be stored on the navigation device 2200 for example. The data stored for this information can be updated.

In FIG. 6, the navigation device 2200 is depicted as being in communication with the server 2150 via a generic communications channel 2152 that can be implemented by any of a number of different arrangements. The communication channel 2152 generically represents the propagating medium or path that connects the navigation device 2200 and the server 2150. The server 2150 and the navigation device 2200 can communicate when a connection via the communications channel 2152 is established between the server 2150 and the navigation device 2200 (noting that such a connection can be a data connection via a mobile device, a direct connection via personal computer via the Internet, etc.).

The communication channel 2152 is not limited to a particular communication technology. Additionally, the communication channel 2152 is not limited to a single communication technology; that is, the channel 2152 may include several communication means/links that use a variety of technology. For example, the communication channel 2152 can be adapted to provide a path for electrical, optical, and/or electromagnetic communications, etc. As such, the communication channel 2152 includes, but is not limited to, one or a combination of the following: electric circuits, electrical conductors such as wires and coaxial cables, fibre optic cables, converters, radio-frequency (RF) waves, the atmosphere, free space, etc. Furthermore, the communication channel 2152 can include intermediate devices such as routers, repeaters, buffers, transmitters, and receivers, for example.

In one illustrative arrangement, the communication channel 2152 includes telephone and computer networks. Furthermore, the communication channel 2152 may be capable of accommodating wireless communication, for example, infrared communications, radio frequency communications, such as microwave frequency communications, etc. Additionally, the communication channel 2152 can accommodate satellite communication.

The communication signals transmitted through the communication channel 2152 include, but are not limited to, signals as may be required or desired for given communication technology. For example, the signals may be adapted to be used in cellular communication technology such as Time Division Multiple Access (TDMA), Frequency Division Multiple Access (FDMA), Code Division Multiple Access (CDMA), Global System for Mobile Communications (GSM), General Packet Radio Service (GPRS), etc. Both digital and analogue signals can be transmitted through the communication channel 2152. These signals may be modulated, encrypted and/or compressed signals as may be desirable for the communication technology.

The server 2150 includes, in addition to other components which may not be illustrated, a processor 2154 operatively connected to a memory 2156 and further operatively connected, via a wired or wireless connection 2158, to a mass data storage device 2160. The mass storage device 2160 contains a store of navigation data and map information, and can again be a separate device from the server 2150 or can be incorporated into the server 2150. The processor 2154 is further operatively connected to transmitter 2162 and receiver 2164, to transmit and receive information to and from navigation device 2200 via communications channel 2152. The signals sent and received may include data, communication, and/or other propagated signals. The transmitter 2162 and receiver 2164 may be selected or designed according to the communications requirement and communication technology used in the communication design for the navigation system 2200. Further, it should be noted that the functions of transmitter 2162 and receiver 2164 may be combined into a single transceiver.

As mentioned above, the navigation device 2200 can be arranged to communicate with the server 2150 through communications channel 2152, using a transmitter and a receiver to send and receive signals and/or data through the communications channel 2152, noting that these devices can further be used to communicate with devices other than server 2150. Further, the transmitter 2166 and receiver 2168 are selected or designed according to communication requirements and communication technology used in the communication design for the navigation device 2200 and the functions of the transmitter 2166 and receiver 2168 may be combined into a single transceiver as described above in relation to Figure 6. Of course, the navigation device 2200 comprises other hardware and/or functional parts, which will be described later herein in further detail.

Software stored in server memory 2156 provides instructions for the processor 2154 and allows the server 2150 to provide services to the navigation device 2200. One service provided by the server 2150 involves processing requests from the navigation device 2200 (e.g. request for updated map data) and transmitting updated map data and other navigation data from the mass data storage 2160 to the navigation device 2200. Another service that can be provided by the server 2150 includes processing navigation data using various algorithms for a desired application and sending the results of these calculations to the navigation device 2200.

The server 2150 constitutes a remote source of data accessible by the navigation device 2200 via communications channel 2152. The server 2150 may include a network server located on a local area network (LAN), wide area network (WAN), virtual private network (VPN), etc.

The server 2150 may include a personal computer such as a desktop, laptop computer, smartphone or tablet device, and the communication channel 2152 may be a cable connected between the personal computer and the navigation device 2200. Alternatively, a personal computer may be connected between the navigation device 2200 and the server 2150 to establish an Internet connection between the server 2150 and the navigation device 2200.

The navigation device 2200 may be provided with information from the server 2150 via information downloads (not least such as updated map data) which may be updated automatically, from time to time, or upon a user connecting the navigation device 2200 to the server 2150 and/or may be more dynamic upon a more constant or frequent connection being made between the server 2150 and navigation device 2200 via a wireless mobile connection device and TCP/IP connection for example. For many dynamic calculations, the processor 2154 in the server 2150 may be used to handle the bulk of processing needs, however, a processor (not shown in Figure 6) of the navigation device 2200 can also handle much processing and calculation, oftentimes independent of a connection to a server 2150.

Referring to Figure 7, it should be noted that the block diagram of the navigation device 2200 is not inclusive of all components of the navigation device, but is only representative of many example components. The navigation device 2200 is located within a housing (not shown) or may be integrated into console or an IVI of a vehicle. The navigation device 2200 includes processing circuitry comprising, for example, the processor 2202 mentioned above, the processor 2202 being coupled to an input device 2204 and a display device, for example a display screen 2206. Although reference is made here to the input device 2204 in the singular, the skilled person should appreciate that the input device 2204 represents any number of input devices, including a keyboard device, voice input device, touch panel and/or any other known input device utilised to input information. Likewise, the display screen 2206 can include any type of display screen such as a Liquid Crystal Display (LCD), for example.

In one arrangement, one aspect of the input device 2204, the touch panel, and the display screen 2206 are integrated so as to provide an integrated input and display device, including a touchpad or touchscreen input to enable both input of information (via direct input, menu selection, etc.) and display of information through the touch panel screen so that a user need only touch a portion of the display screen 2206 to select one of a plurality of display choices or to activate one of a plurality of virtual or "soft" buttons. In this respect, the processor 2202 supports a Graphical User Interface (GUI) that operates in conjunction with the touchscreen.

In the navigation device 2200, the processor 2202 is operatively connected to and capable of receiving input information from input device 2204 via a connection 2210, and operatively connected to at least one of the display screen 2206 and the output device 2208, via respective output connections 2212, to output information thereto. The navigation device 2200 may include an output device 2208, for example an audible output device (e.g. a loudspeaker). As the output device 2208 can produce audible information for a user of the navigation device 2200, it should equally be understood that input device 2204 can include a microphone and software for receiving input voice commands as well. Further, the navigation device 2200 can also include any additional input device 2204 and/or any additional output device, such as audio input/output devices for example.

The processor 2202 is operatively connected to memory 2214 via connection 2216 and is further adapted to receive/send information from/to input/output (I/O) ports 2218 via connection 2220, wherein the I/O port 2218 is connectible to an I/O device 2222 external to the navigation device 2200. The external I/O device 2222 may include, but is not limited to an external listening device, such as an earpiece for example. The connection to I/O device 2222 can further be a wired or wireless connection to any other external device such as a car stereo unit for hands-free operation and/or for voice activated operation for example, for connection to an earpiece or headphones, and/or for connection to a mobile telephone for example, wherein the mobile telephone connection can be used to establish a data connection between the navigation device 2200 and the Internet or any other network for example, and/or to establish a connection to a server via the Internet or some other network for example.

The memory 2214 of the navigation device 2200 comprises a portion of nonvolatile memory (for example to store program code) and a portion of volatile memory (for example to store data as the program code is executed). The navigation device also comprises a port 2228, which communicates with the processor 2202 via connection 2230, to allow a removable memory card (commonly referred to as a card) to be added to the device 2200. In the embodiment being described the port is arranged to allow an SD (Secure Digital) card to be added. In other embodiments, the port may allow other formats of memory to be connected (such as Compact Flash (CF) cards, Memory Sticks, xD memory cards, USB (Universal Serial Bus) Flash drives, MMC (MultiMedia) cards, SmartMedia cards, Microdrives, or the like).

Figure 7 further illustrates an operative connection between the processor 2202 and an antenna/receiver 2224 via connection 2226, wherein the antenna/receiver 2224 can be a GPS antenna/receiver. It should be understood that the antenna and receiver designated by reference numeral 2224 are combined schematically for illustration, but that the antenna and receiver may be separately located components, and that the antenna may be a GPS patch antenna or helical antenna for example.

It will, of course, be understood by one of ordinary skill in the art that the electronic components shown in Figure 7 are powered by one or more power sources (not shown) in a conventional manner. Such power sources may include an internal battery and/or an input for a low voltage DC supply or any other suitable arrangement. As will be understood by one of ordinary skill in the art, different configurations of the components shown in Figure 7 are contemplated. For example, the components shown in Figure 7 may be in communication with one another via wired and/or wireless connections and the like. Thus, the navigation device 2200 described herein can be a portable or handheld navigation device 2200.

In addition, wherein the navigation device 2200 is embodied as a portable or handheld navigation device, it can be connected or "docked" in a known manner to a vehicle such as a bicycle, a motorbike, a car or a boat for example. Such a navigation device 2200 is then removable from the docked location for portable or handheld navigation use. Indeed, in other embodiments, the device 2200 may be arranged to be handheld to allow for navigation of a user.

FIG. 8 schematically illustrates a system 800 for updating map data for a map stored on an apparatus 801. The system comprising:
the apparatus 801; and
a server 802 configured to:
   receive, from the apparatus, location information representative of one or more previous journeys of a user;
   use the location information representative of one or more previous journeys of the user to determine a first set of one or more of the plurality of geographical areas that are most frequently travelled in by the user;
   define a first region of the map based on the first set;
   determine, at the server, whether the map data stored for the geographic areas of the first region are up-to-date; and
   responsive to determining that the stored map data for at least one of the geographic areas of the first region is not up-to-date, send, to the apparatus, information indicative of the geographic areas of the first region that are not up-to-date; and
wherein the apparatus is configured to select a first communication means for receiving updated map data for the geographic areas of the first region that are not up-to-date.

Figure 8 also schematically illustrates the various communication means/channels/pathways 803 - 807 via which updated map data from the server 802 may be transferred to the apparatus 801; namely via:
a long range/cellular communication network 803
an intermediary portable wireless communications device 804
a short range wireless communication network, (e.g. Wi-Fi ^{™}) 805
an intermediary portable mass storage device 806, wherein the updated map data is transferred thereto via a user's personal computer 807 having been pre-downloaded on the user's personal computer 807.

Examples of the present disclosure may take the form of a method, an apparatus, a computer program or a system. Accordingly, examples may be implemented in hardware, software or a combination of hardware and software.

Examples of the present disclosure are described using flowchart illustrations and schematic block diagrams. It will be understood that each block (of the flowchart illustrations and block diagrams), and combinations of blocks, can be implemented by computer program instructions of a computer program. These program instructions may be provided to one or more processor(s), processing circuitry or controller(s) such that the instructions which execute on the same create means for causing implementing the functions specified in the block or blocks, i.e. such that the method may be computer implemented. The computer program instructions may be executed by the processor(s) to cause a series of operational steps/actions to be performed by the processor(s) to produce a computer implemented process such that the instructions which execute on the processor(s) provide steps for implementing the functions specified in the block or blocks.

Accordingly, the blocks support: combinations of means for performing the specified functions; combinations of actions for performing the specified functions; and computer program instructions/algorithm for performing the specified functions. It will also be understood that each block, and combinations of blocks, can be implemented by special purpose hardware-based systems which perform the specified functions or actions, or combinations of special purpose hardware and computer program instructions.

By way of example, the apparatus includes one or more components for [effecting functionality]. It is contemplated that the functions of these components may be combined in one or more components or performed by other components of equivalent functionality.

Examples of the present disclosure provide both a method and corresponding apparatus comprising various modules, means or circuitry that provide the functionality for performing/applying the actions of the method. The modules, means or circuitry may be implemented as hardware, or may be implemented as software or firmware to be performed by a computer processor. In the case of firmware or software, examples of the present disclosure can be provided as a computer program product including a computer readable storage structure embodying computer program instructions (i.e. the software or firmware) thereon for performing by the computer processor.

Where a structural feature has been described, it may be replaced by means for performing one or more of the functions of the structural feature whether that function or those functions are explicitly or implicitly described.

It will be understood that each block and combinations of blocks, can be implemented by various means, such as hardware, firmware, and/or software including one or more computer program instructions. For example, one or more of the procedures described above may be embodied by computer program instructions. In this regard, the computer program instructions which embody the procedures described above may be stored by a memory storage device and performed by a processor.

As will be appreciated, any such computer program instructions may be loaded onto a computer or other programmable apparatus (i.e. hardware) to produce a machine, such that the instructions when performed on the programmable apparatus create means for implementing the functions specified in the blocks. These computer program instructions may also be stored in a computer-readable medium that can direct a programmable apparatus to function in a particular manner, such that the instructions stored in the computer-readable memory produce an article of manufacture including instruction means which implement the function specified in the blocks. The computer program instructions may also be loaded onto a programmable apparatus to cause a series of operational actions to be performed on the programmable apparatus to produce a computer-implemented process such that the instructions which are performed on the programmable apparatus provide actions for implementing the functions specified in the blocks.

Although specific terms are employed herein, they are used in a generic and descriptive sense only and not for purposes of limitation.

Features described in the preceding description may be used in combinations other than the combinations explicitly described. Although functions have been described with reference to certain features, those functions may be performable by other features whether described or not. Although features have been described with reference to certain examples, those features may also be present in other examples whether described or not. Accordingly, features described in relation to one example/aspect of the disclosure may include any or all of the features described in relation to another example/aspect of the disclosure, and vice versa, to the extent that they are not mutually inconsistent. Although various examples of the present disclosure have been described in the preceding paragraphs, it should be appreciated that modifications to the examples given can be made without departing from the scope of the invention as set out in the claims.

In this description, the wording 'connect' and 'communication' and their derivatives mean operationally connected/in communication. It should be appreciated that any number or combination of intervening components can exist (including no intervening components), i.e. so as to provide direct or indirect connection/coupling/communication. Any such intervening components may include hardware and/or software components.

As used herein, the "determining" (and grammatical variants thereof) can include, not least: calculating, computing, processing, deriving, investigating, looking up (e.g., looking up in a table, a database or another data structure), ascertaining and the like. Also, "determining" can include receiving (e.g., receiving information), accessing (e.g., accessing data in a memory) and the like. Also, "determining" can include resolving, selecting, choosing, establishing, and the like.

In this description, reference has been made to various examples. The description of features or functions in relation to an example indicates that those features or functions are present in that example. The use of the term 'example' or 'for example' or 'may' in the text denotes, whether explicitly stated or not, that such features or functions are present in at least the described example, whether described as an example or not, and that they can be, but are not necessarily, present in some or all other examples. Thus 'example', 'for example' or 'may' refers to a particular instance in a class of examples. A property of the instance can be a property of only that instance or a property of the class or a property of a sub-class of the class that includes some but not all of the instances in the class.

The presence of a feature (or combination of features) in a claim is a reference to that feature) or combination of features) itself and also to features that achieve substantially the same technical effect (equivalent features). The equivalent features include, for example, features that are variants and achieve substantially the same result in substantially the same way. The equivalent features include, for example, features that perform substantially the same function, in substantially the same way to achieve substantially the same result.

Whilst endeavouring in the foregoing specification to draw attention to those features of examples of the present disclosure believed to be of particular importance it should be understood that the applicant claims protection in respect of any patentable feature or combination of features hereinbefore referred to and/or shown in the drawings whether or not particular emphasis has been placed thereon.

The examples of the present disclosure and the accompanying claims may be suitably combined in any manner apparent to one of ordinary skill in the art.

Each and every claim is incorporated as further disclosure into the specification and the claims are embodiment(s) of the present invention.

## Claims

1. A method of updating map data (512) for a map (200) stored on an apparatus (2200), wherein the map is partitioned into a plurality of geographical areas (203₁ - 203ₙ), and wherein the apparatus comprises a plurality of communication means (803 - 806), the method comprising the apparatus performing the following:
determining location information (201) representative of one or more journeys of a user;
using the location information representative of one or more journeys of the user to determine:
a first set of one or more of the plurality of geographical areas (204₁, 204₂) most frequently travelled in, and
at least a second set of one or more of the plurality of geographical areas that are less frequently travelled in than the first set of one or more of the plurality of geographical areas;
defining:
a first region (205) of the map based on the first set, and
at least a second region of the map based on the at least second set;
determining whether the stored map data for the geographic areas of the first region and the at least second region are up-to-date;
responsive to determining that the stored map data for at least one of the geographic areas of the first region is not up-to-date, selecting, from the plurality of communication means, a first communication means for receiving updated map data for the at the least one of the geographic areas of the first region; and
responsive to determining that the stored map data for at least one of the geographic areas of the at least second region is not up-to-date, selecting, from the plurality of communication means, a second communication means for receiving updated map data for the at the least one of the geographic areas of the at least second region, wherein the second communication means differs from the first communication means.

2. The method of claim 1, wherein the one or more journeys of a user comprises one or more previous journeys of a user; and
wherein using the location information representative of one or more journeys of the user to determine a first set of one or more of the plurality of geographical areas comprises using the location information representative of one or more previous journeys of the user to determine a first set of one or more of the plurality of geographical areas that are most frequently travelled in by the user.

3. The method of any one or more of the previous claims, wherein the one or more journeys comprises:
a current journey the user is undergoing, or
one or more planned journeys of the user;
the method further comprising:
using the location information representative of the current or planned journey to determine one or more of the plurality of geographical areas that the current or planned journeys passes through; and
including the determined geographic areas that the current or planned journeys passes through in the first region.

4. The method of any one or more of the previous claims, wherein selecting the first communication means comprises selecting one or more of:
a long range communication network,
a long range wireless communication interface,
a cellular communication network, and
a cellular communication interface.

5. The method of any one or more of the previous claims, wherein selecting the second communication means comprises selecting one of:
a short range communication network,
a short range wireless communication interface,
a wireless local area network,
a wireless local area network interface,
a wired communication pathway, and
a wired communication interface.

6. The method of any one or more of the previous claims, further comprising:
determining whether the stored map data for the geographic areas of the first region are up-to-date at a first frequency.

7. The method of any one or more of the previous claims, further comprising:
determining whether the stored map data for the geographic areas of the at least second region are up-to-date at an at least second frequency.

8. The method of any one or more of the previous claims, further comprising:
setting a first priority level for the first region; and
setting at least a second priority level for the at the least second region; and
determining an order of installation of the updated map data for the regions in dependence upon their respective priority levels.

9. The method of any one or more of the previous claims, further comprising:
collecting and storing positional information of the user;
determining location information representative of one or more previous journeys of the user using the collected and stored positional information.

10. An apparatus comprising means configured to cause the apparatus at least to perform the method as claimed in one or more of claims 1 - 9.

11. The apparatus of claim 10, wherein the apparatus is comprised in one or more of:
a navigation device;
an in-vehicle built in navigation device;
a portable navigation device;
a handheld mobile communication device;
a mass storage device; or
a module of an Advanced Driver Assistance System.

12. A computer program that, when performed by at least one processor of an apparatus (2200) further comprising a plurality of communication means (803-806), causes the method as claimed in any one or more of claims 1 - 9 to be performed.

13. A system (2150, 2200) for updating map data (512) for a map (200) stored on an apparatus (2200), wherein the map is partitioned into a plurality of geographical areas (203₁ - 203ₙ), the system comprising:
the apparatus (2200), wherein the apparatus comprises a plurality of communication means (803 - 806); and
a server (2150) configured to:
receive, from the apparatus, location information (201) representative of one or more previous journeys of a user;
use the location information representative of one or more previous journeys of the user to determine:
a first set of one or more of the plurality of geographical areas (204₁, 204₂) that are most frequently travelled in by the user, and
at least a second set of one or more of the plurality of geographical areas that are less frequently travelled in than the first set of one or more of the plurality of geographical areas;
define:
a first region (205) of the map based on the first set, and
at least a second region of the map based on the at least second set;
determine, at the server, whether the map data stored, at the apparatus, for the geographic areas of the first region and the at least second region are up-to-date;
responsive to determining that the stored map data for at least one of the geographic areas of the first region is not up-to-date, send, to the apparatus, information indicative of the geographic areas of the first region that are not up-to-date;
responsive to determining that the stored map data for at least one of the geographic areas of the second region is not up-to-date, send, to the apparatus, information indicative of the geographic areas of the second region that are not up-to-date
wherein the apparatus is configured to select, from the plurality of communication means:
a first communication means for receiving updated map data for the geographic areas of the first region that are not up-to-date, and
a second communication means for receiving updated map data for the geographic areas of the second region that are not up-to-date, wherein the second communication means differs from the first communication means.

14. The system of claim 13, wherein the apparatus is one or more of:
a navigation device;
an in-vehicle built in navigation device;
a portable navigation device;
a handheld mobile communication device;
a mass storage device; or
a module of an Advanced Driver Assistance System.

## Patentansprüche

1. Verfahren zum Aktualisieren von Kartendaten (512) für eine Karte (200), die auf einer Vorrichtung (2200) gespeichert ist, wobei die Karte in eine Vielzahl von geografischen Bereichen (203₁ - 203ₙ) unterteilt ist, und wobei die Vorrichtung eine Vielzahl von Kommunikationsmitteln (803 - 806) umfasst, wobei das Verfahren umfasst, dass die Vorrichtung Folgendes durchführt:
Bestimmen von Standortinformationen (201), die für eine oder mehrere Fahrten eines Benutzers repräsentativ sind;
Verwenden der Standortinformationen, die für eine oder mehrere Fahrten des Benutzers repräsentativ sind, um Folgendes zu bestimmen:
einen ersten Satz eines oder mehrerer der Vielzahl von geografischen Bereichen (204₁, 204₂), die am häufigsten bereist werden, und
zumindest einen zweiten Satz eines oder mehrerer der Vielzahl von geografischen Bereichen, die weniger häufig bereist werden als der erste Satz eines oder mehrerer der Vielzahl von geografischen Bereichen;
Definieren:
eines ersten Gebietes (205) der Karte basierend auf dem ersten Satz, und
zumindest eines zweiten Gebietes der Karte basierend auf dem zumindest zweiten Satz;
Bestimmen, ob die gespeicherten Kartendaten für die geografischen Bereiche des ersten Gebietes und des zumindest zweiten Gebietes auf dem neuesten Stand sind;
als Reaktion auf das Bestimmen, dass die gespeicherten Kartendaten für zumindest einen der geografischen Bereiche des ersten Gebietes nicht auf dem neuesten Stand sind, Auswählen, aus der Vielzahl von Kommunikationsmitteln, eines ersten Kommunikationsmittels zum Empfangen aktualisierter Kartendaten für den zumindest einen der geografischen Bereiche des ersten Gebietes; und
als Reaktion auf das Bestimmen, dass die gespeicherten Kartendaten für zumindest eines der geografischen Bereiche des zumindest zweiten Gebietes nicht auf dem neuesten Stand sind, Auswählen, aus der Vielzahl von Kommunikationsmitteln, eines zweiten Kommunikationsmittels zum Empfangen aktualisierter Kartendaten für den zumindest einen der geografischen
Bereiche des zumindest zweiten Gebietes, wobei sich das zweite Kommunikationsmittel von dem ersten Kommunikationsmittel unterscheidet.

2. Verfahren nach Anspruch 1, wobei die eine oder mehreren Fahrten eines Benutzers eine oder mehrere frühere Fahrten eines Benutzers umfassen; und
wobei das Verwenden der Standortinformationen, die für eine oder mehrere Fahrten des Benutzers repräsentativ sind, um einen ersten Satz eines oder mehrerer der Vielzahl von geografischen Bereichen zu bestimmen, das Verwenden der Standortinformationen, die für eine oder mehrere frühere Fahrten des Benutzers repräsentativ sind, umfasst, um einen ersten Satz eines oder mehrerer der Vielzahl von geografischen Bereichen zu bestimmen, die von dem Benutzer am häufigsten bereist werden.

3. Verfahren nach einem oder mehreren der vorhergehenden Ansprüche, wobei die eine oder mehreren Fahrten Folgendes umfassen:
eine aktuelle Fahrt, die der Benutzer gerade erfährt, oder
eine oder mehrere geplante Fahrten des Benutzers;
wobei das Verfahren ferner Folgendes umfasst:
Verwenden der Standortinformationen, die für die aktuelle oder geplante Fahrt repräsentativ sind, um einen oder mehrere der Vielzahl von geografischen Bereichen zu bestimmen, durch die die aktuelle oder geplante Fahrt verläuft; und
einschließlich der bestimmten geografischen Bereiche, durch die die aktuellen oder geplanten Fahrten in dem ersten Gebiet verlaufen.

4. Verfahren nach einem oder mehreren der vorhergehenden Ansprüche, wobei das Auswählen des ersten Kommunikationsmittels das Auswählen eines oder mehrerer von Folgendem umfasst:
ein Fernkommunikationsnetz,
eine Schnittstelle für drahtlose Fernkommunikation,
ein Mobilfunkkommunikationsnetz und
eine Mobilfunkkommunikationsschnittstelle.

5. Verfahren nach einem oder mehreren der vorhergehenden Ansprüche, wobei das Auswählen des zweiten Kommunikationsmittels das Auswählen eines von Folgendem umfasst:
ein Nahrbereichskommunikationsnetz,
eine Schnittstelle für drahtlose Nahbereichskommunikation,
ein drahtloses lokales Netzwerk,
eine Schnittstelle für ein drahtloses lokales Netzwerk,
einen Pfad für verdrahtete Kommunikation,
und eine Schnittstelle für verdrahtete Kommunikation.

6. Verfahren nach einem oder mehreren der vorhergehenden Ansprüche, ferner umfassend:
Bestimmen, ob die gespeicherten Kartendaten für die geografischen Bereiche des ersten Gebietes mit einer ersten Häufigkeit auf dem neuesten Stand sind.

7. Verfahren nach einem oder mehreren der vorhergehenden Ansprüche, ferner umfassend:
Bestimmen, ob die gespeicherten Kartendaten für die geografischen Bereiche des zumindest zweiten Gebietes mit einer zumindest zweiten Häufigkeit auf dem neuesten Stand sind.

8. Verfahren nach einem oder mehreren der vorhergehenden Ansprüche, ferner umfassend:
Festlegen einer ersten Prioritätsstufe für das erste Gebiet; und
Festlegen zumindest einer zweiten Prioritätsstufe für das zumindest zweite Gebiet;
und
Bestimmen einer Installationsreihenfolge der aktualisierten Kartendaten für die Gebiete in Abhängigkeit von ihren jeweiligen Prioritätsstufen.

9. Verfahren nach einem oder mehreren der vorhergehenden Ansprüche, ferner umfassend:
Sammeln und Speichern von Positionsinformationen des Benutzers;
Bestimmen von Standortinformationen, die für eine oder mehrere frühere Fahrten des Benutzers repräsentativ sind, unter Verwendung der gesammelten und gespeicherten Positionsinformationen.

10. Vorrichtung, umfassend Mittel, die dazu konfiguriert sind, zu bewirken, dass die Vorrichtung zumindest das Verfahren nach einem oder mehreren der Ansprüche 1 bis 9 durchführt.

11. Vorrichtung nach Anspruch 10, wobei die Vorrichtung zu einem oder mehreren von Folgendem gehört:
ein Navigationsgerät;
ein fahrzeuginternes eingebautes Navigationsgerät;
ein tragbares Navigationsgerät;
ein mobiles Hand-Kommunikationsgerät;
ein Massenspeichergerät; oder
ein Modul eines fortschrittlichen Fahrerassistenzsystems.

12. Computerprogramm, das, wenn es durch mindestens einen Prozessor einer Vorrichtung (2200) durchgeführt wird, die ferner eine Vielzahl von Kommunikationsmitteln (803-806) umfasst,
bewirkt, dass das Verfahren nach einem oder mehreren der Ansprüche 1 bis 9 durchgeführt wird.

13. System (2150, 2200) zum Aktualisieren von Kartendaten (512) für eine Karte (200), die auf einer Vorrichtung (2200) gespeichert ist, wobei die Karte in eine Vielzahl von geografischen Bereichen (203₁ - 203ₙ) unterteilt ist, wobei das System Folgendes umfasst:
die Vorrichtung (2200), wobei die Vorrichtung eine Vielzahl von Kommunikationsmitteln (803-806) umfasst; und
einen Server (2150), der zu Folgendem konfiguriert ist:
Empfangen, von der Vorrichtung, von Standortinformationen (201), die für eine oder mehrere frühere Fahrten eines Benutzers repräsentativ sind;
Verwenden der Standortinformationen, die für eine oder mehrere frühere Fahrten des Benutzers repräsentativ sind, um Folgendes zu bestimmen:
einen ersten Satz eines oder mehrerer der Vielzahl von geografischen Bereichen (204₁, 204₂), die von dem Benutzer am häufigsten bereist werden, und
zumindest einen zweiten Satz eines oder mehrerer der Vielzahl von geografischen Bereichen, die weniger häufig bereist werden als der erste Satz eines oder mehrerer der Vielzahl von geografischen Bereichen;
Definieren:
eines ersten Gebietes (205) der Karte basierend auf dem ersten Satz und zumindest eines zweiten Gebietes der Karte basierend auf dem zumindest zweiten Satz;
Bestimmen an dem Server, ob die bei der Vorrichtung gespeicherten Kartendaten für die geografischen Bereiche des ersten Gebietes und des zumindest zweiten Gebietes auf dem neuesten Stand sind;
als Reaktion auf das Bestimmen, dass die gespeicherten Kartendaten für zumindest einen der geografischen Bereiche des ersten Gebietes nicht auf dem neuesten Stand sind, Senden, an die Vorrichtung, von Informationen, die für die geografischen Bereiche des ersten Gebietes bezeichnend sind, die nicht auf dem neuesten Stand sind;
als Reaktion auf das Bestimmen, dass die gespeicherten Kartendaten für zumindest einen der geografischen Bereiche des zweiten Gebietes nicht auf dem neuesten Stand sind, Senden, an die Vorrichtung, von Informationen, die für die geografischen Bereiche des zweiten Gebietes bezeichnend sind, die nicht auf dem neuesten Stand sind, wobei die Vorrichtung dazu konfiguriert ist, aus der Vielzahl von Kommunikationsmitteln Folgendes auszuwählen:
ein erstes Kommunikationsmittel zum Empfangen aktualisierter Kartendaten für die geografischen Bereiche des ersten Gebietes, die nicht auf dem neuesten Stand sind, und
ein zweites Kommunikationsmittel zum Empfangen aktualisierter Kartendaten für die geografischen Bereiche des zweiten Gebietes, die nicht auf dem neuesten Stand sind, wobei sich das zweite Kommunikationsmittel von dem ersten Kommunikationsmittel unterscheidet.

14. System nach Anspruch 13, wobei die Vorrichtung eines oder mehrere von Folgendem ist:
ein Navigationsgerät;
ein fahrzeuginternes eingebautes Navigationsgerät;
ein tragbares Navigationsgerät;
ein mobiles Hand-Kommunikationsgerät;
ein Massenspeichergerät; oder
ein Modul eines fortschrittlichen Fahrerassistenzsystems.

## Revendications

1. Procédé de mise à jour de données cartographiques (512) pour une carte (200) stockée sur un appareil (2200), dans lequel la carte est divisée en une pluralité de zones géographiques (203₁ à 203ₙ), et dans lequel l'appareil comprend une pluralité de moyens de communication (803 à 806), le procédé comprenant l'appareil effectuant ce qui suit :
la détermination d'informations de localisation (201) représentatives d'un ou plusieurs trajets d'un utilisateur ;
l'utilisation des informations de localisation représentatives d'un ou plusieurs trajets de l'utilisateur pour déterminer :
un premier ensemble d'une ou plusieurs de la pluralité de zones géographiques (204₁, 204₂) les plus fréquemment parcourues, et
au moins un deuxième ensemble d'une ou plusieurs de la pluralité de zones géographiques qui sont moins fréquemment parcourues que le premier ensemble d'une ou plusieurs de la pluralité de zones géographiques ;
la définition de :
une première région (205) de la carte sur la base du premier ensemble, et
au moins une deuxième région de la carte sur la base de l'au moins un deuxième ensemble ;
la détermination si les données cartographiques stockées pour les zones géographiques de la première région et de l'au moins une deuxième région sont à jour ;
en réponse à la détermination que les données cartographiques stockées pour au moins l'une des zones géographiques de la première région ne sont pas à jour, la sélection, parmi la pluralité de moyens de communication, de premiers moyens de communication permettant la réception des données cartographiques mises à jour pour l'au moins une des zones géographiques de la première région ; et
en réponse à la détermination que les données cartographiques stockées pour au moins l'une des zones géographiques de l'au moins une deuxième région ne sont pas à jour, la sélection, parmi la pluralité de moyens de communication, de deuxièmes moyens de communication permettant la réception des données cartographiques mises à jour pour l'au moins une des zones géographiques de l'au moins une deuxième région, dans lequel les deuxièmes moyens de communication diffèrent des premiers moyens de communication.

2. Procédé selon la revendication 1, dans lequel l'un ou plusieurs trajets d'un utilisateur comprennent un ou plusieurs trajets précédents d'un utilisateur ; et
dans lequel l'utilisation des informations de localisation représentatives d'un ou plusieurs trajets de l'utilisateur pour déterminer un premier ensemble d'une ou plusieurs de la pluralité de zones géographiques comprend l'utilisation des informations de localisation représentatives d'un ou plusieurs trajets précédents de l'utilisateur pour déterminer un premier ensemble d'une ou plusieurs de la pluralité de zones géographiques qui sont le plus fréquemment parcourues par l'utilisateur.

3. Procédé selon l'une quelconque ou plusieurs des revendications précédentes, dans lequel l'un ou plusieurs trajets comprend :
un trajet en cours que l'utilisateur parcourt actuellement, ou
un ou plusieurs trajets prévus de l'utilisateur ;
le procédé comprenant en outre :
l'utilisation des informations de localisation représentatives du trajet en cours ou prévu pour déterminer une ou plusieurs de la pluralité de zones géographiques traversées par le trajet en cours ou prévu ; et
l'inclusion des zones géographiques déterminées traversées par le trajet en cours ou prévu dans la première région.

4. Procédé selon l'une quelconque ou plusieurs des revendications précédentes, dans lequel la sélection des premiers moyens de communication comprend la sélection d'un ou plusieurs parmi :
un réseau de communication à longue portée,
une interface de communication sans fil longue portée,
un réseau de communication cellulaire, et
une interface de communication cellulaire.

5. Procédé selon l'une quelconque ou plusieurs des revendications précédentes, dans lequel la sélection des deuxièmes moyens de communication comprend la sélection d'un parmi :
un réseau de communication à courte portée,
une interface de communication sans fil courte portée,
un réseau local sans fil,
une interface de réseau local sans fil,
un chemin de communication filaire, et
une interface de communication filaire.

6. Procédé selon l'une quelconque ou plusieurs des revendications précédentes, comprenant en outre :
la détermination si les données cartographiques stockées pour les zones géographiques de la première région sont à jour à une première fréquence.

7. Procédé selon l'une quelconque ou plusieurs des revendications précédentes, comprenant en outre :
la détermination si les données cartographiques stockées pour les zones géographiques de l'au moins une deuxième région sont à jour à au moins deuxième fréquence.

8. Procédé selon l'une quelconque ou plusieurs des revendications précédentes, comprenant en outre :
la définition d'un premier niveau de priorité pour la première région ; et
la définition d'au moins un deuxième niveau de priorité pour l'au moins deuxième région ; et
la détermination d'un ordre d'installation des données cartographiques mises à jour pour les régions en fonction de leurs niveaux de priorité respectifs.

9. Procédé selon l'une quelconque ou plusieurs des revendications précédentes, comprenant en outre :
la collecte et le stockage d'informations de position de l'utilisateur ;
la détermination d'informations de localisation représentatives d'un ou plusieurs trajets précédents de l'utilisateur à l'aide des informations de position collectées et stockées.

10. Appareil comprenant des moyens configurés pour amener l'appareil à au moins réaliser le procédé selon une ou plusieurs des revendications 1 à 9.

11. Appareil selon la revendication 10, dans lequel l'appareil est compris dans un ou plusieurs parmi :
un dispositif de navigation ;
un dispositif de navigation embarqué dans le véhicule ;
un dispositif de navigation portable ;
un dispositif de communication mobile portable ;
un dispositif de stockage de masse ; ou
un module d'un système avancé d'aide à la conduite.

12. Programme informatique qui, lorsqu'il est effectué par au moins un processeur d'un appareil (2200) comprenant en outre une pluralité de moyens de communication (803 à 806), provoque la réalisation du procédé selon l'une quelconque ou plusieurs des revendications 1 à 9.

13. Système (2150, 2200) de mise à jour de données cartographiques (512) pour une carte (200) stockée sur un appareil (2200), dans lequel la carte est divisée en une pluralité de zones géographiques (203₁ à 203ₙ), le système comprenant :
l'appareil (2200), dans lequel l'appareil comprend une pluralité de moyens de communication (803 à 806) ; et
un serveur (2150) configuré pour :
recevoir, de l'appareil, des informations de localisation (201) représentatives d'un ou plusieurs trajets précédents d'un utilisateur ;
utiliser les informations de localisation représentatives d'un ou plusieurs trajets précédents de l'utilisateur pour déterminer :
un premier ensemble d'une ou plusieurs de la pluralité de zones géographiques (204₁, 204₂) qui sont le plus fréquemment parcourues par l'utilisateur, et
au moins un deuxième ensemble d'une ou plusieurs de la pluralité de zones géographiques qui sont moins fréquemment parcourues que le premier ensemble d'une ou plusieurs de la pluralité de zones géographiques ;
définir :
une première région (205) de la carte sur la base du premier ensemble, et au moins une deuxième région de la carte sur la base de l'au moins un deuxième ensemble ;
déterminer, au niveau du serveur, si les données cartographiques stockées, au niveau de l'appareil, pour les zones géographiques de la première région et de l'au moins une deuxième région sont à jour ;
en réponse à la détermination que les données cartographiques stockées pour au moins l'une des zones géographiques de la première région ne sont pas à jour, envoyer, à l'appareil, des informations indicatives des zones géographiques de la première région qui ne sont pas à jour ;
en réponse à la détermination que les données cartographiques stockées pour au moins l'une des zones géographiques de la deuxième région ne sont pas à jour, envoyer, à l'appareil, des informations indicatives des zones géographiques de la deuxième région qui ne sont pas à jour,
dans lequel l'appareil est configuré pour sélectionner, parmi la pluralité de moyens de communication :
des premiers moyens de communication permettant de recevoir des données cartographiques mises à jour pour les zones géographiques de la première région qui ne sont pas à jour, et
des deuxièmes moyens de communication permettant de recevoir des données cartographiques mises à jour pour les zones géographiques de la deuxième région qui ne sont pas à jour, dans lequel les deuxièmes moyens de communication diffèrent des premiers moyens de communication.

14. Système selon la revendication 13, dans lequel l'appareil est un ou plusieurs parmi :
un dispositif de navigation ;
un dispositif de navigation embarqué dans le véhicule ;
un dispositif de navigation portable ;
un dispositif de communication mobile portable ;
un dispositif de stockage de masse ; ou
un module d'un système avancé d'aide à la conduite.
